# EUROPEAN PATENT APPLICATION

(11) **EP 3 706 421 A1**
(43) Date of publication of application: **09.09.2020**
(21) Application number: 19305266.9
(22) Date of filing: 07.03.2019
(51) Int. Cl.: H04N 19/54, H04N 19/517

(54) **METHOD AND APPARATUS FOR VIDEO ENCODING AND DECODING BASED ON AFFINE MOTION COMPENSATION**

(71) Applicant: InterDigital VC Holdings, Inc., Wilmington, DE 19809 (US)
(72) Inventor: ROBERT, Antoine, 35576 CESSON-SEVIGNE (FR); LELEANNEC, Fabrice, 35576 CESSON-SEVIGNE (FR); POIRIER, Tangi, 35576 CESSON-SEVIGNE (FR)
(74) Representative: Huchet, Anne

(57) **Abstract**

Different implementations are described, particularly implementations for video encoding and decoding based on affine motion compensation are presented. Accordingly, for a block being encoded or decoded in affine mode, at least two normalized control point motion vectors for a virtual block of fixed size located at a normalized position among fixed positions for virtual blocks in the spatial partition of the picture are stored, the normalized position of the virtual block being derived from the position of the block being encoded in the spatial partition of the picture. Advantageously, such arrangement allows to reduce the amount of memory for storing data for affine motion compensation.

## Description

### TECHNICAL FIELD

At least one of the present embodiments generally relates to, e.g., a method or an apparatus for video encoding or decoding, and more particularly, to a method or an apparatus for storing, for the block being encoded or decoded in affine mode, at least two normalized control motion vectors for affine motion compensation.

### BACKGROUND

The domain technical field of the one or more implementations is generally related to video compression. At least some embodiments relate to improving compression efficiency compared to existing video compression systems such as HEVC (HEVC refers to High Efficiency Video Coding, also known as H.265 and MPEG-H Part 2 described in "ITU-T H.265 Telecommunication standardization sector of ITU (10/2014), series H: audiovisual and multimedia systems, infrastructure of audiovisual services - coding of moving video, High efficiency video coding, Recommendation ITU-T H.265"), or compared to under development video compression systems such as VVC (Versatile Video Coding, a new standard being developed by JVET, the Joint Video Experts Team).

To achieve high compression efficiency, image and video coding schemes usually employ prediction, including motion vector prediction, and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized, and entropy coded. To reconstruct the video, the compressed data are decoded by inverse processes corresponding to the entropy coding, quantization, transform, and prediction.

A recent addition to high compression technology includes a motion model based on affine modeling. In particular affine modeling is used for motion compensation in encoding and decoding of video pictures. In general, affine modeling is a model using at least four parameters, e.g., two coordinates of two control point motion vectors (CPMVs) representing the motion at the respective corners of a block of picture, that allows deriving a motion field for the whole block of a picture to simulate, e.g., rotation and homothety (zoom). A disadvantage of affine motion modeling is the huge amount of data needed for storing the affine motion model of a block. It is thus desirable to optimize the storage of affine model for memory efficiency.

### SUMMARY

The purpose of the invention is to overcome at least one of the disadvantages of the prior art. For this purpose, according to a general aspect of at least one embodiment, a method for video encoding is presented, comprising determining, for a block being encoded in affine mode, at least two control point motion vectors of an affine model, the block being encoded belonging to a spatial partition of a picture; storing, for the block being encoded in affine mode, a set of parameters of the affine model being representative of the at least two control point motion vectors of an affine model, a size of the block being encoded, a location in the spatial partition of the picture of block being encoded; and encoding the block using the affine model based on the determined at least two control point motion vectors of the affine model. According to a particular characteristic, the method further comprises processing the at least two control point motion vectors to determine at least two normalized control point motion vectors for a virtual block of fixed size located at a normalized position among fixed positions for virtual blocks in the spatial partition of the picture, the normalized position of the virtual block being derived from the position of the block being encoded in the spatial partition of the picture. Advantageously, the at least two normalized control point motion vectors and the normalized location of the virtual block inside the partition of the picture are stored as the set of parameters of the affine model.

According to another general aspect of at least one embodiment, a method for video decoding is presented, comprising determining, for a block being decoded in affine mode, at least two control point motion vectors of an affine model, the block being decoded belonging to a spatial partition of a picture; storing, for the block being decoded in affine mode, a set of parameters of the affine model being representative of the at least two control point motion vectors of an affine model, a size of the block being decoded, a location in the spatial partition of the picture of block being decoded; and decoding the block using the affine model based on the determined at least two control point motion vectors of the affine model. As for the encoding method, according to a particular characteristic the method further comprises processing the at least two control point motion vectors to determine at least two normalized control point motion vectors for a virtual block of fixed size located at a normalized position among fixed positions for virtual blocks in the spatial partition of the picture, the normalized position of the virtual block being derived from the position of the block being decoded in the spatial partition of the picture; and storing the at least two normalized control point motion vectors and normalized location of the virtual block inside the partition of the picture as the set of parameters of the affine model.

According to another general aspect of at least one embodiment, an apparatus for video encoding is presented comprising means for implementing any one of the embodiments of the encoding method.

According to another general aspect of at least one embodiment, an apparatus for video decoding is presented comprising means for implementing any one of the embodiments of the decoding method.

According to another general aspect of at least one embodiment, an apparatus for video encoding is provided, comprising one or more processors, and at least one memory. The one or more processors is configured to implement to any one of the embodiments of the encoding method.

According to another general aspect of at least one embodiment, an apparatus for video decoding is provided, comprising one or more processors and at least one memory. The one or more processors is configured to implement to any one of the embodiments of the decoding method.

According to another general aspect of at least one embodiment, determining, for a block being encoded or decoded in affine mode, at least two control point motion vectors of an affine model comprises determining a neighboring block of the block being encoded or decoded in affine mode from which the affine model is obtained; obtaining a set of parameters of the affine model of the neighboring block from the previously stored set of parameters of affine model of virtual blocks, the set of parameters comprising at least two normalized control point motion vectors for a virtual neighboring block of fixed size located at a normalized position among fixed positions for virtual blocks in the spatial partition of the picture, the normalized position of the virtual neighboring block being derived from the position of the neighboring block; and determining the at least two control point motion vectors of an affine model for the block being encoded or decoded from the at least two normalized control point motion vectors for the virtual neighboring block.

According to another general aspect of at least one embodiment, the at least two normalized control point motion vectors located at the normalized position of the virtual block corresponding to the block being encoded or decoded are directly obtained from processing of the at least two normalized control point motion vectors for the virtual neighboring block of the block being encoded or decoded.

According to another general aspect of at least one embodiment, the set of parameters of the affine model are stored in a local affine memory buffer used for block-to-block affine model determination inside a same row of spatial partition of a picture.

According to another general aspect of at least one embodiment, the set of parameters of the affine model are stored in a history based affine memory buffer used for storing affine model of the last encoded or decoded blocks among a limited number of blocks for affine model determination inside a same row of spatial partition of a picture.

According to different variants, the fixed size of a virtual block is determined between 128x128, 64x64, 32x32 and 16x16. According to others variants, the fixed size of a virtual block is a fraction 1, ½, ¼ of the size of the spatial partition in width and height or in surface. According to a variant, there is only one virtual block in the spatial partition. According to a variant, the virtual block width and virtual block height are equal, the virtual block being a square.

According to another general aspect of at least one embodiment, the at least two at least two normalized control point motion vectors are stored in mantissa and exponent format.

According to another general aspect of at least one embodiment, only one set of parameters of the affine model for each of the virtual blocks in the spatial partition of the picture is stored.

According to another general aspect of at least one embodiment, the fixed positions of virtual blocks in the spatial partition of the picture are located at node of a regular grid of the spatial partition of fixed step and wherein the normalized position of the virtual block being derived from the greatest integer less than or equal to the position of the block being encoded or decoded in the spatial partition of the picture scaled by the fixed step..

According to another general aspect of at least one embodiment, a non-transitory computer readable medium is presented containing data content generated according to the method or the apparatus of any of the preceding descriptions.

According to another general aspect of at least one embodiment, a signal is provided comprising video data generated according to the method or the apparatus of any of the preceding descriptions.

One or more of the present embodiments also provide a computer readable storage medium having stored thereon instructions for encoding or decoding video data according to any of the methods described above. The present embodiments also provide a computer readable storage medium having stored thereon a bitstream generated according to the methods described above. The present embodiments also provide a method and apparatus for transmitting the bitstream generated according to the methods described above. The present embodiments also provide a computer program product including instructions for performing any of the methods described.

### BRIEF DESCRIPTION OF THE DRAWINGS

FIG. 1 illustrates an example of Coding Tree Unit (CTU) and Coding Tree (CT) concepts to represent a compressed HEVC picture.
FIG. 2 illustrates an example of divisions of a Coding Tree Unit (CTU) into Coding Units (CUs), Prediction Units (PUs), and Transform Units (Tus) in a compressed HEVC picture.
FIG. 3 illustrates examples of affine modeling using four parameters and six parameters.
FIG. 4 illustrates examples of 4x4 sub-block based affine motion vector field using four parameters or six parameters affine mode.
FIG. 5 illustrates spatial positions (A0, A1, B0, B1 and B2) of affine MV from which CPMV prediction candidate are retrieved to predict the affine model of current CU in Affine AMVP and FIG. 6 illustrates spatial positions of non-affine MV from which CPMV prediction candidate are retrieved to predict the affine model of current CU in Affine AMVP.
FIG. 7 illustrates a method for determining the list of CPMVP candidates in Affine AMVP.
FIG. 8 illustrates spatial positions (A, B, C, D and E) of motion vector prediction candidates in the Affine Merge and FIG. 9 illustrates spatial derivation of affine control points motion vectors in Affine Merge.
FIG. 10 illustrates an example of affine inheritance crossing CTU rows for memory storage in an encoding and/or decoding method.
FIG. 11 illustrates an example of encoding or decoding method comprising storing normalized CPMVs according to a general aspect of at least one embodiment.
FIG. 12 illustrates an example an example of encoding or decoding method comprising retrieving normalized CPMVs for deriving CPMVs according to a general aspect of at least one embodiment.
FIG. 13 illustrates an example virtual blocks of fixed size located at a normalized position among fixed positions for virtual blocks in the spatial partition of the picture.
FIG. 14 illustrates an example encoding or decoding method comprising affine block prediction in which at least one embodiment may be implemented.
FIG. 15 illustrates an example of CPMVs and normalized CPMVs for a virtual block according to a general aspect of at least one embodiment.
FIG. 16 illustrates an example of CPMVs and normalized CPMVs for a virtual neighboring block according to a general aspect of at least one embodiment.
FIG. 17 illustrates an example encoding or decoding method comprising affine block prediction according to a general aspect of at least one embodiment
FIG 18 illustrates a block diagram of an embodiment of video encoder in which various aspects of the embodiments may be implemented.
FIG. 19 illustrates a block diagram of an embodiment of video encoder in which various aspects of the embodiments may be implemented.
FIG. 20 illustrates a block diagram of an example apparatus in which various aspects of the embodiments may be implemented.

### DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

The various embodiments are described with respect to the encoding/decoding of a picture. They may be applied to encode/decode a part of picture, such as a slice or a tile, or a whole sequence of pictures.

Various methods are described above, and each of the methods comprises one or more steps or actions for achieving the described method. Unless a specific order of steps or actions is required for proper operation of the method, the order and/or use of specific steps and/or actions may be modified or combined.

It is desirable to reduce the amount of memory needed to store the affine motion models. In particular, in the case where, the affine control point motion vectors of a block are needed to derive the affine control point motion vectors of subsequent blocks inside a same row of spatial partition comprising the blocks as explained hereafter. At least one embodiment of the present principles relates to normalizing control point motion vectors responsive to a normalized block size for storage. For instance, control point motion vectors are stored as if the current block is a 64x64 block. Advantageously, equations to compute affine model from a neighboring affine block are simplified by considering that neighboring block is always referred to a 64x64 block and the top-left of this block is aligned on a 64x64 grid.

At least one embodiment of the present principles relates to storing of the Control Point Motion vectors without storing the size and the position of the block. At least one embodiment of the present principles relates to modifying equations to derive affine model for the current block from a neighboring affine block.

In section 1, some limitations regarding the affine motion compensation are disclosed.

In section 2, several embodiments of a method for determining and storing normalized control point motion vectors for affine motion compensation are disclosed.

In section 3, additional information and generic embodiments implementing the disclosed method are disclosed.

### 1 Affine motion compensation: principles and limitations

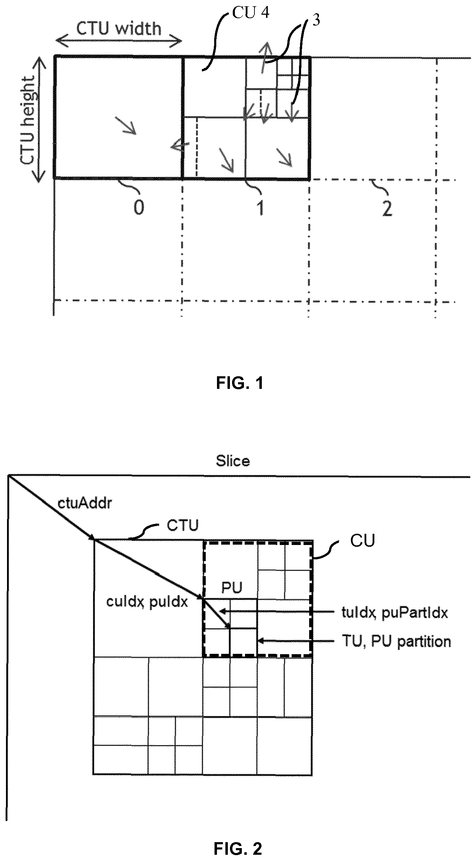

In HEVC, motion compensated temporal prediction is employed to exploit the redundancy that exists between successive pictures of a video. To do that, a motion vector 3 is associated with each prediction unit (PU). Indeed, each CTU is represented by a Coding Tree in the compressed domain. This is a quad-tree division of the CTU, where each leaf is called a Coding Unit (CU) as illustrated in FIG. 1 for CTUs 0, 1 and 2. Each CU 4 is then given some Intra or Inter prediction parameters as prediction information. To do so, a CU may be spatially partitioned into one or more Prediction Units (PUs), each PU being assigned some prediction information. The Intra or Inter coding mode is assigned on the CU level. These concepts are further illustrated in FIG. 2 for an exemplary CTU and a CU.

In HEVC, one motion vector is assigned to each PU. This motion vector is used for motion compensated temporal prediction of the considered PU. Therefore, in HEVC, the motion model that links a predicted block and its reference block simply consists of a translation or calculation based on the reference block and the corresponding motion vector. A recent addition to high compression technology includes using a motion model based on affine modeling.

### 1.1 Affine Motion Compensation

In the latest development of WC, some richer motion models are supported to improve temporal prediction. To do so, a PU can be spatially divided into sub-PU and a richer model can be used to assign each sub-PU a dedicated motion vector. Besides, a CU is no more divided into PU or TU, and some motion data is directly assigned to each CU. A CU can be divided into sub-CU and a motion vector can be computed for each sub-CU.

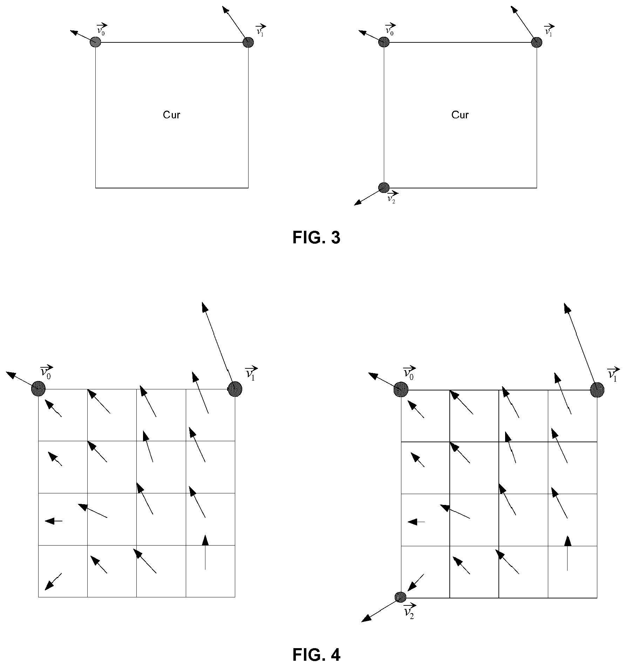

One of the new motion models introduced in VVC is the affine model, which basically consists in using an affine model to represent the motion vectors in a CU. The affine motion models are based on 2 (respectively 4 parameters model) or 3 (respectively 6 parameters model) control points as illustrated on FIG. 3. The affine motion field for 2 control points, also called the 4-parameters affine model, consists in the following motion vector component values for each position (x, y) inside the considered block: ${ \begin{matrix}{v}_{x} & = \frac{\left({v}_{1 x}-{v}_{0 x}\right)}{w} x - \frac{\left({v}_{1 y}-{v}_{0 y}\right)}{w} y + {v}_{0 x} \\ {v}_{y} & = \frac{\left({v}_{1 y}-{v}_{0 y}\right)}{w} x + \frac{\left({v}_{1 x}-{v}_{0 x}\right)}{w} y + {v}_{0 y}\end{matrix}$ Where (*v*₀*ₓ, v*_{0*y*}) and (*v*_{1*x*,} *v*_{1*y*}) are the so-called control point motion vectors used to generate the affine motion field; *̅v̅*̅₀̅, = (*v*₀*ₓ, v*_{0*y*}) is the motion vector top-left corner control point; *̅v̅*̅₁̅, = (*v*₁*ₓ, v*_{1*y*}) is the motion vector top-right corner control point as illustrated on left part of FIG. 3.

The Equation 1, may be written as Equation 2 by using Equation 3 for obtaining the motion field: ${ \begin{matrix}{v}_{x} = ax - by + {v}_{0 x} \\ {v}_{y} = bx + ay + {v}_{0 y}\end{matrix}$ $a = \frac{\left({v}_{1 x}-{v}_{0 x}\right)}{w} b = \frac{\left({v}_{1 y}-{v}_{0 y}\right)}{w}$

A model with 3 control points, called the 6-parameters affine motion model, can also be used to represent the subblock-based motion field of a given coding unit. The motion field in the case of the 6-parameter affine model is computed as in ${ \begin{matrix}{v}_{x} = \frac{\left({v}_{1 x}-{v}_{0}\right)}{w} x + \frac{\left({v}_{2 , x}-{v}_{0 , x}\right)}{h} y + {v}_{0 x} \\ {v}_{y} = \frac{\left({v}_{1 y}-{v}_{0 y}\right)}{w} x + \frac{\left({v}_{2 , y}-{v}_{0 , y}\right)}{h} y + {v}_{0 y}\end{matrix}$ ${ \begin{matrix}{v}_{x} = ax + cy + {v}_{0 x} \\ {v}_{y} = bx + dy + {v}_{0 y}\end{matrix}$ $c = \frac{\left({v}_{2 , x}-{v}_{0 , x}\right)}{h} d = \frac{\left({v}_{2 , y}-{v}_{0 , y}\right)}{h}$

In practice, to keep complexity reasonable, the same motion vector is computed for each sample of 4x4 sub-block (sub-CU) of the considered CU, as illustrated on FIG. 4. An affine motion vector is computed from the control point motion vectors, at the position of the center of each sub-block. The obtained motion vector (MV) is represented at 1/16-pel accuracy. As a result, the prediction unit (PU) of a coding unit in the affine mode is built through the motion compensated prediction of each sub-block with its own motion vector.

Besides, in the latest development of WC, affine motion compensation is used in 2 modes: Affine AMVP (for Advanced Motion Vector Prediction) and Affine Merge.

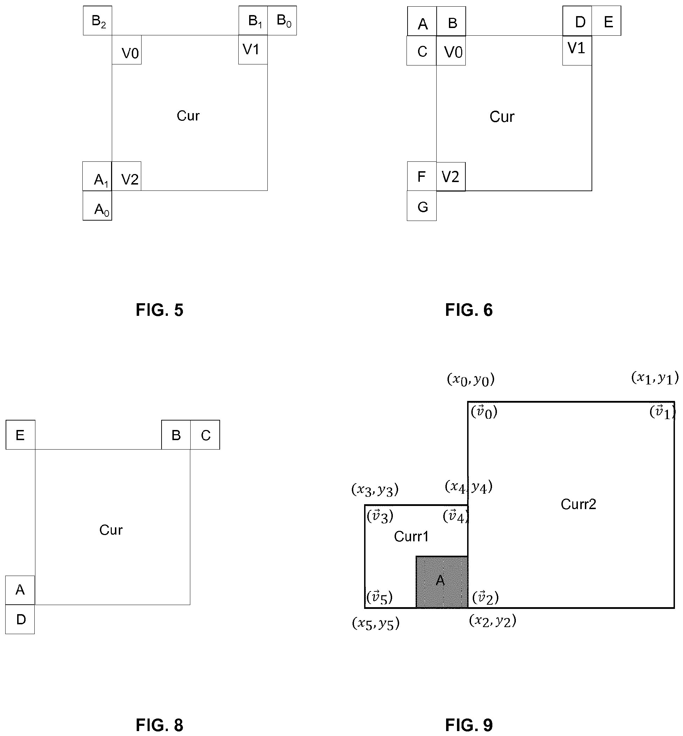

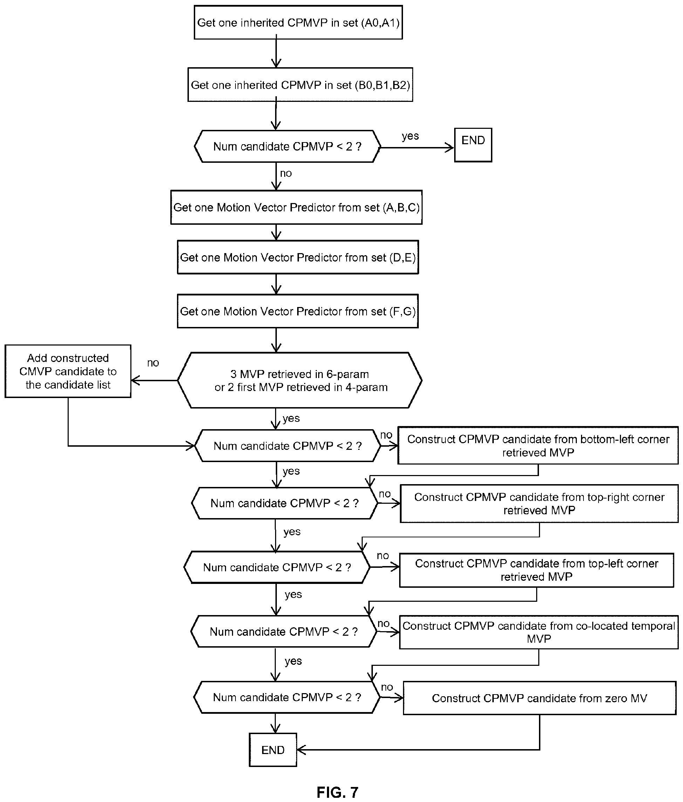

In Affine AMVP mode, a CU, which size is larger than 8x8, is predicted using affine motion compensation responsive to neighboring motion information. Affine AMVP mode is signaled through a flag in the bit-stream coded at CU level. The generation of the Affine Motion Field for that inter CU includes determining control point motion vectors (CPMV) which are obtained by the decoder through the addition of a motion vector difference (MVD) plus a control point motion vector prediction (CPMVP). The CPMVP is a pair (for a 4-parameters affine model specified by 2 control point motion vectors) or a triplet (for a 6-parameters affine model specified by 3 control point motion vectors) of motion vectors (MV) which serve as predictors of the CPMVs of the current CU. The CPMVPs of current CU are either inherited from affine neighboring CUs (as in the Affine Merge mode described hereafter) or constructed from non-affine neighboring CUs. As illustrated on FIG. 5, an inherited CPMVP is retrieved from a motion vector MV at the spatial positions A0, A1, B0, B1 and B2 when the neighboring CU is an affine CU. An inherited CPMVP is considered as valid if its reference picture is equal to the reference picture of the current CU. Or as illustrated on FIG. 6, CPMVPs are constructed from non-affine motion vectors. This is achieved by taking a motion vector predictor respectively in each set (A, B, C) and (D, E) and/or (F, G) according to affine motion model. The CPMVPs are gathered in a list of CPMVP candidates. Without giving more details, FIG. 7 illustrates a method for determining the list of CPMVP candidates in Affine AMVP either based on affine neighboring CU or non-affine neighboring CU.

In Affine Merge mode, a CU-level flag indicates if a CU in merge mode employs affine motion compensation. If so, then, the first available neighboring CU that has been coded in an Affine mode is selected among the ordered list of candidate positions (A, B, C, D, E) as illustrated in FIG. 8. Once the first neighboring CU in Affine mode is obtained, then CPMVP of the current CU is inherited from this affine neighboring CU. The 3 motion vectors (*̅v̅*̅₃̅, *̅v̅*̅₄̅, *̅v̅*̅₅̅) from the top-left, top-right and bottom-left corners of the neighboring affine CU are retrieved as illustrated on FIG. 9 for a bottom-left corner corresponding to candidate position A of FIG. 8 in a 6-parameters model. Based on these motion vectors, the two or three CPMVs of the top-left, top-right and/or bottom-left corners of current CU (*̅v̅*̅₀̅, *̅v̅*̅₁̅, *̅v̅*̅₂̅) are derived as follows.

For a CU with a 4-parameters affine model, the 2 CPMVs of current CU are derived as follows: $\begin{matrix}∘ \vec{{D}_{hor}} = \frac{\left(\vec{{v}_{4}}-\vec{{v}_{3}}\right)}{{W}_{neighb}} \\ ∘ \vec{{D}_{ver}} = \left(\begin{matrix}- \vec{{D}_{hor}} . y \\ \vec{{D}_{hor}} . x\end{matrix}\right) \\ ∘ \vec{{v}_{0}} = \vec{{v}_{3}} + \vec{{D}_{hor}} \times \left({X}_{cur}-{X}_{nei}\right) + \vec{{D}_{ver}} \times \left({Y}_{cur}-{Y}_{nei}\right) \\ ∘ \vec{{v}_{1}} = \vec{{v}_{3}} + \vec{{D}_{hor}} \times \left({X}_{cur}+{W}_{cur}-{X}_{nei}\right) + \vec{{D}_{ver}} \times \left({Y}_{cur}-{Y}_{nei}\right)\end{matrix}$

For a CU in 6-parameters affine model, the 3 CPMVs of current CU are derived as follows: $\begin{matrix}∘ \vec{{D}_{hor}} = \frac{\left(\vec{{v}_{4}}-\vec{{v}_{3}}\right)}{{W}_{neighb}} \\ ∘ \vec{{D}_{ver}} = \frac{\left(\vec{{v}_{5}}-\vec{{v}_{3}}\right)}{{H}_{neighb}} \\ ∘ \vec{{v}_{0}} = \vec{{v}_{3}} + \vec{{D}_{hor}} \times \left({X}_{cur}-{X}_{nei}\right) + \vec{{D}_{ver}} \times \left({Y}_{cur}-{Y}_{nei}\right) \\ ∘ \vec{{v}_{1}} = \vec{{v}_{3}} + \vec{{D}_{hor}} \times \left({X}_{cur}+{W}_{cur}-{X}_{nei}\right) + \vec{{D}_{ver}} \times \left({Y}_{cur}-{Y}_{nei}\right) \\ ∘ \vec{{v}_{2}} = \vec{{v}_{3}} + \vec{{D}_{hor}} \times \left({X}_{cur}-{X}_{nei}\right) + \vec{{D}_{ver}} \times \left({Y}_{cur}+{H}_{cur}-{Y}_{nei}\right)\end{matrix}$

Once the control point motion vectors *̅v̅*̅₀̅, *̅v̅*̅₁̅ and/or *̅v̅*̅₂̅ of current CU are obtained, the motion field inside current CU is computed on a 4x4 sub-CU basis, through the model of Equation 1.

According to other variants, more candidates for Affine Merge mode are considered (inherited, constructed and zeros). At the encoder, the best candidate is then selected through a Rate-Distortion Optimization process and the index of this best candidate is coded in the bitstream.

### 1.2 Memory storage for affine motion compensation

Thus, the affine motion model of the current CU (either in Affine Merge mode of Affine AMVP mode) is, for instance, inherited from a neighboring affine CU. Two cases can occur to derive affine motion model parameters from an affine neighbor, either affine inheritance crossing CTU rows or affine inheritance inside a CTU row which will have impact on memory storage as currently designed in the WC test model.

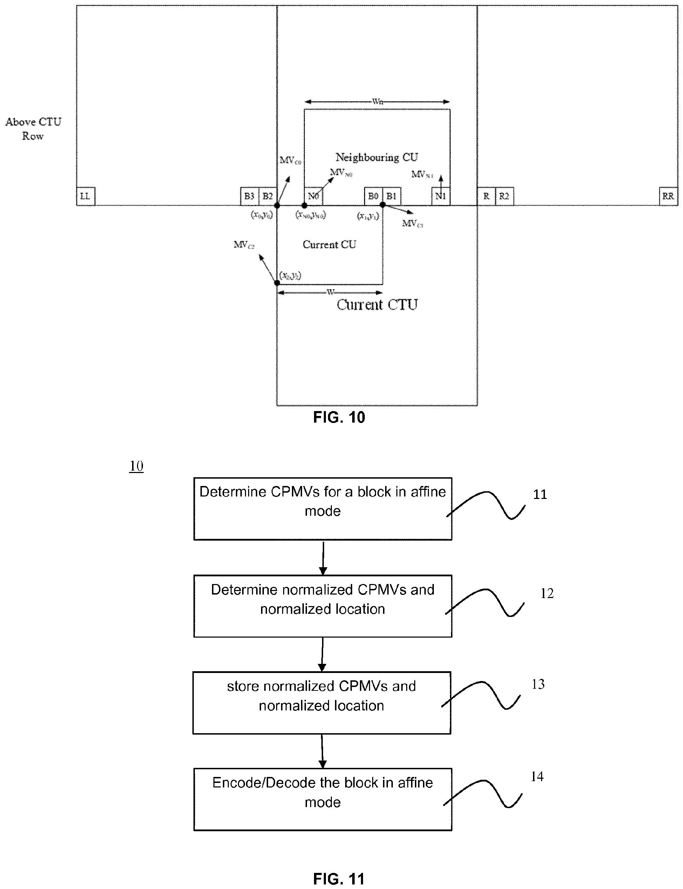

In the case where the affine model of the current CU is inherited from a neighboring 4×4 block in the above CTU row, MVs stored in the regular MV line buffer are accessed. FIG. 10 shows an example when the current CU employs an affine coding mode, and its CPMVs are inherited from the neighboring block position B0 from the above CTU row. In this case, the codec needs to store the width of the neighboring CU that contains B0 (Wn in FIG. 10) MVs of the bottom-left (N0) and bottom-right (N1) 4×4 blocks of the neighboring CU (MV_{N0} and MV_{N1} **Error! Reference source not found.in** FIG. 10), and the bottom-right coordinates (x_{N0}, y_{N0}) of N0. In this example, MV_{N0} and MV_{N1} are used to compute the CPMVs of the current CU.

In the case where the affine model of the current CU is inherited from a neighboring CU inside the current CTU row, then the CPMVs of the neighboring CUs are used to derive the CPMVs of the current CU using Equation 8. In this latter case, the CPMVs of the CUs located inside the same CTU row of the current CU are stored in a dedicated memory buffer, which is called the local affine memory buffer or local CPMV buffer in the following. This buffer stores the information listed below, necessary to derive the affine CPMVs from CU to CU inside a given CTU row:

| | |
|---|---|
| 3 Affine CPMVs for 2 Lists | (18 bits * 2 * 2 * 3 = 216) (18 bits range * 2 * 3 CPMVs * 2 lists) |
| Reference index | (4 bits * 2) |
| Inter direction | (2 bits) |
| Affine type | (1 bit) |
| Position (x, y) | (5 bits *2 (4x4 block inside a CTU)) |
| CU width and height | (3 bits*2 (consider log2 of the size)) |
| GBI index (optional) | (3 bits) |
| Total: | 276, 35 Bytes |

It is desirable to reduce the amount of memory needed to store the above affine related parameters needed to derive the affine CPMVs of subsequent CUs. In the case of VVC codec, the optimizing the memory is raised for block inside the current CTU row, i.e. the size of the local affine memory buffer need to be optimized. However, the present principles are not limited to the VVC codec and also apply to memory optimization of blocks not belonging to the same row of CTU.

At least one embodiment of the present principles relates to storing normalized CPMVs in memory, wherein the normalized CPMV represents CPMV of a fixed size CU. Advantageously, the need for storing the CU size and position is removed. Besides, the computation of CMPVs using Equation 8 is simplified.

### 2 At least one embodiment for determining normalized CPMVs for Affine motion compensation

### 2.1 At least one embodiment of an encoding or decoding method storing normalized CMPVs

A general aspect of at least one embodiment aims to reduce the amount of data needed for affine motion compensation by storing normalized version of CPMVs. Advantageously, the. normalized storage of Control Point Motion Vectors enables the simplification of Equation 8 and reduces the memory storage needed since at least the size of the neighboring blocks no longer need to be stored in order to compute affine motion model for the current block. By removing CU size and position, only 250 bits (32 Bytes) are needed to store motion information.

FIG. 11 illustrates an example of encoding or decoding method comprising storing normalized CPMVs according to a general aspect of at least one embodiment.

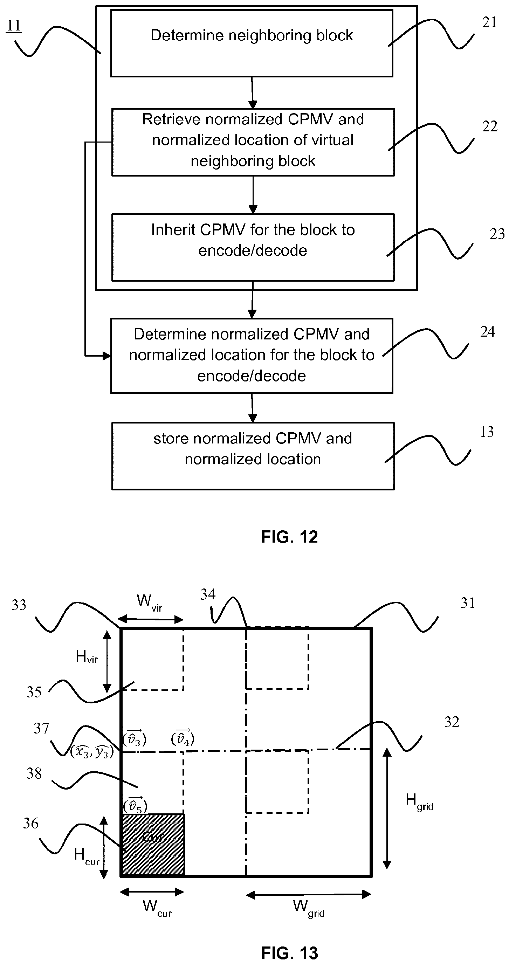

The skilled in the art will appreciate that the normalization of CPMVs applies in motion compensation in a same way either at the encoding or decoding. Therefore, the present principles are disclosed for an encoding or decoding method. It is assumed at this step that a block is being encoded or decoded in inter prediction using affine motion compensation. The block, typically a CU, belongs to a spatial partition of a picture, typically a CTU in the previous sections. The encoding or decoding method 10 determines, for the block in affine mode, at least two control point motion vectors CPMVs of an affine model. Indeed, for 4 parameters affine model, two CPMVs are determined while for a 6-parameters affine model three CPMVs are determined. The type of affine model used for the block is for instance signaled by a flag and stored as part of a set of parameters of the affine model of a block. In a step 11, the affine model for the current block in affine mode is determined. As previously exposed, the affine model for the block are, for instance, inherited from the affine model of a neighboring block previously processed, i.e. the CPMVs for the block are inherited according to Eq. 7 or Eq 8 from the stored CPMVs of a previously processed neighboring block. According to a salient idea of the present principles, the affine models of the previously processed block are compressed or normalized in order to reduce the required amount of data representing the affine model. The computation of the affine model for the current block from the normalized affine model of neighboring block are detailed with FIG. 12. The following steps of the encoding or decoding method relates to the normalization of the affine model of block being currently processed before storing.

Thus, for an affine model for the current block being processed in affine mode, a set of parameters being representative the affine model is stored in memory. The parameters comprise information representative of two or three control point motion vectors, a size (width and height) of the current block, a location (coordinates x, y) of the current block in the spatial partition of the picture. Theses parameters are addressed by the normalization according to the present principles. According to different non-limiting examples, the parameters also comprises information for CPMVs associated with 2 lists, for a reference index, or for an inter direction.

In a step 12, the control point motion vectors are processed to determine normalized control point motion vectors for a virtual block (also referred to as a bounding block) of fixed size located at a normalized position among fixed positions for virtual blocks in the spatial partition of the picture. FIG. 13 illustrates an example of virtual blocks of fixed size located at a normalized position among fixed positions for virtual blocks in the spatial partition of the picture. A spatial partition 31 of the picture, for instance a CTU, is associated with a grid 32. The fixed positions 33, 34, 37 of virtual blocks in the spatial partition 31 of the picture are located at nodes of the grid. In a preferred embodiment, the grid is regular and determined by a fixed height step H_{grid} and a fixed width step W_{grid}. But according to other variants, any pattern for the grid is compatible with the present principles. According to a particular embodiment, only one fixed position, for instance top-left corner position 33, is available for the spatial partition. According to another particular embodiment, the fixed height H_{grid} of the grid is equal to the fixed width W_{grid} and is called fixed step of the grid. Besides, the size of a virtual block 35 is defined by its height Hᵥᵢᵣ and its width Wᵥᵢᵣ. According to another particular embodiment, the height Hᵥᵢᵣ of the virtual block is equal to its width Wᵥᵢᵣ. According to yet another particular embodiment, the size of virtual block is aligned to the step of the grid, that is Hᵥᵢᵣ = Wᵥᵢᵣ = H_{grid} = W_{grid}. The normalized position 37 of the virtual block 38 are derived from the position of the current block 36 in the spatial partition 31. As latter on exposed with examples of section 2.3, the normalized position of the virtual block is derived from the greatest integer less than or equal to the position of the current block in the spatial partition of the picture scaled by the fixed step. The x,y coordinates of the current block are respectively scaled by the grid width step Wᵥᵢᵣ and the grid height step Hᵥᵢᵣ and the floor value of the scaled coordinates are the coordinates of the normalized position derived from the current block while considering that the x,y coordinates are positive. Thus, instead of storing a coordinate on 2x5 bits (for 1024 possible positions of a 4x4 block inside a 128x128 spatial partition), a lower number of bits based on the grid size is needed. In the particular embodiment where only one location is possible per spatial partition, the information of the position is advantageously skipped in the storing. According to different variants, the size of grid is determined between sizes of 128x128, 64x64, 32x32 and 16x16. According to other variants, the size of grid is a fraction of spatial partition, for instance, 1, ½, ¼ in any of width and height of the spatial partition. According to other variants, the size of grid is a fraction of spatial partition, for instance, 1, ½, ¼, 1/16 in surface. In the exemplary example of FIG. 13, the fixed step W_{grid} = H_{grid} is equal to half spatial partition width or height. Accordingly, 1 bit is needed to store x coordinate and 1 bit is needed to store y coordinate of a virtual block. Besides, according to different variants, the size of virtual block is determined between 128x128, 64x64, 32x32 and 16x16 size. According to other variants, the size of virtual block is a fraction of spatial partition, for instance, the size of a virtual block is determined between 1, ½, ¼ in any of width and height of the spatial partition, or also surface. Accordingly, in a preferred embodiment, the size of the virtual block is larger than or equal to the size of a current block since the size of the virtual block is defined in order to reduce the amount of affine motion data to store. In another embodiment, the size of the virtual block is lower than the size of the current block. As for the derivation of CPMVs from CPMVs of neighboring block, the control point motion vectors are processed to determine normalized control point motion vectors for the virtual block derived from the current block. Since, the virtual blocks are of fixed size, there is no need for storing the width and the height of the virtual block, thus another 3 bits (considering the log2 of the width or height of a block) x 2 are saved in the storing of the affine model for the current block. Various examples of embodiment for normalizing CPMVs are described in more details hereafter in section 2.3.1.

In a step 13, the normalized CPMVs and normalized location of the virtual block inside the partition of the picture are stored as the set of parameters of the affine model. Advantageously, the amount of data for the normalized affine model is reduced.

In a final step 14, the current block using the affine model based on the determined two control point motion vectors is encoded or decoded in affine mode. Steps 12 and 13 are indifferently processed before or after the encoding/decoding step or even in parallel.

FIG. 12 illustrates an example an example of encoding or decoding method comprising retrieving normalized CPMVs for deriving CPMVs according to a general aspect of at least one embodiment. FIG. 12 illustrates an example of CPMVs' determining step 11 of the encoding or decoding method of FIG. 11.

The skilled in the art will appreciate that the inheriting of CPMVs from normalized CPMVs applies in motion compensation in a same way either at the encoding or decoding. Therefore, the present principles are disclosed for an encoding or decoding method. Besides, the skilled in the art will appreciate that the inheriting of CPMVs from normalized CPMVs also applies in motion estimation at the encoding.

As for deriving CPMVs in the prior art method, in a step 21 a neighboring block coded in affine mode from which the CPMVs are inherited is determined. In a step 22, the affine model of the neighboring block is retrieved from the stored affine models of the previously processed block. According to the particular characteristic where the affine models are stored in a normalized way, the affine model of the neighboring block is retrieved from the set of parameters of affine model of virtual blocks wherein the set of parameters comprises at least two normalized control point motion vectors for a virtual neighboring block of fixed size located at a normalized position among fixed positions for virtual blocks in the spatial partition of the picture. The normalized position of the virtual neighboring block is derived from the position of the neighboring block in the spatial partition. Same process as for the deriving the virtual block from the current block is applied. Then, in a step 23, the two or three CPMVs for the current block are inherited from the two or three normalized CPMVs for the virtual neighboring block, the location of the virtual neighboring block and the fixed size of the virtual block. An example embodiment for deriving CPMVs from normalized CPMVs is described in more details hereafter in section 2.3.2.

In yet, another embodiment illustrated on FIG. 12, the normalized CPMVs for the virtual block are directly derived from the normalized CPMVs for the virtual neighboring block. In step 24, normalized control point motion vectors located at the normalized position of the virtual block corresponding to the current block are obtained from processing of normalized control point motion vectors for the virtual neighboring block of the current block. An example embodiment for deriving normalized CPMVs for a virtual block from normalized CPMVs of a virtual neighboring block is described in more details hereafter in section 2.3.3. Then, in a step 13, the normalized CPMVs and normalized location of the virtual block inside the partition of the picture as the set of parameters of the affine model. Steps 23 and 24 are indifferently processed before or after or even in parallel.

### 2.2 At least one embodiment in which an encoding or decoding method storing normalized CMPVs can be implemented

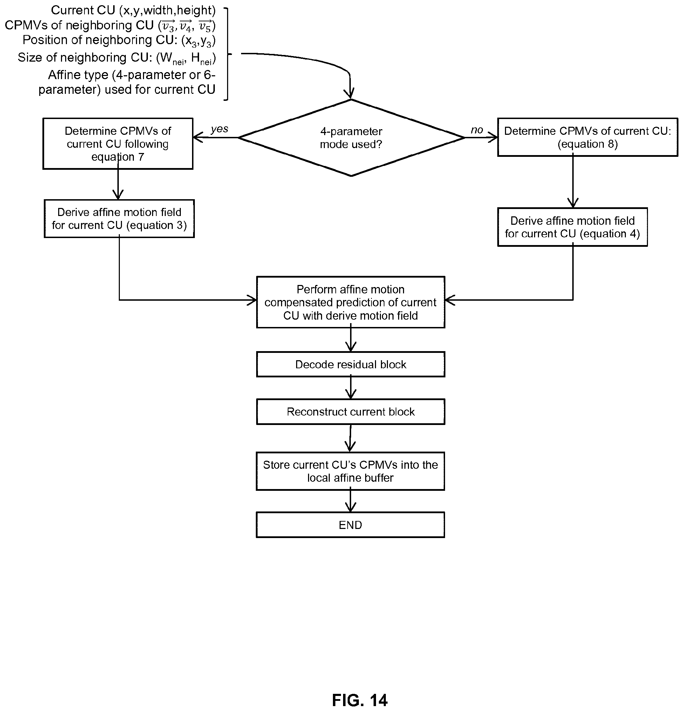

FIG. 14 illustrates an example encoding or decoding method comprising affine CU prediction in which in which at least one embodiment may be implemented. FIG. 14 depicts the decoding method of a block, a current CU, that uses affine motion compensated temporal prediction, and which affine motion model is inherited from an identified set of CPMVs (*̅v̅*̅₃̅,- *̅v̅*̅₄̅, *̅v̅*̅₅̅) from an already coded and decoded block, neighboring CU, which position is identified by the input parameters (*x*₃*, y*₃). Other input parameters to the method of FIG.14. are the size (*Wₙₑᵢ*, *Hₙₑᵢ*) of the neighboring CU from which current CU is inhereting its affine model, and the affine type (4-parameter or 6-parameter) assigned to the current CU.

The motion compensation method comprises the following step. The affine type of current CU is first checked. If current CU's affine type is 4-parameters, then the CPMVs of current CU are inherited from the CU at position (*x*₃,*y*₃), based on Equation 7. Then, the affine motion field of current CU is then generated according to Equation 3. Otherwise if current CU's affine type is 6-parameters, the CPMVs of current CU is inherited according to Equation 8. Then, the affine motion field of current CU is then generated according to Equation 4. Next, affine motion compensation is applied to obtain the temporal prediction of current block, current CU. Next, in case of the decoding method, the current CU is reconstructed through decoding the residual block of current CU, and adding it to the temporally predicted block. Finally, the CPMVs of the current CU are stored into the local affine buffer. The present principles are implemented in the step for inheriting CPMVs of current CU and before the step of storing CPMVs of current CU.

### 2.3 An example embodiment for normalized affine Control Point Motion Vectors

### 2.3.1 Normalizing and storing CPMVs

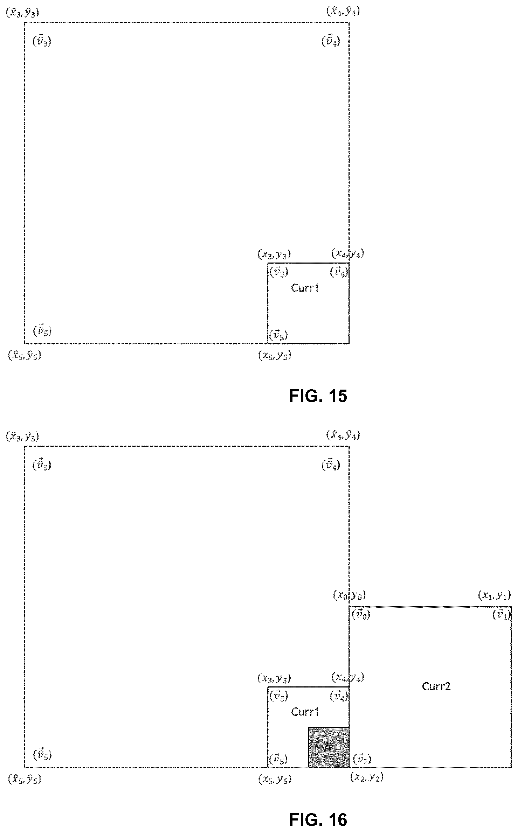

An example method of spatial derivation for affine model is described with refence to FIG. 15. FIG. 15 illustrates an example of CPMVs and normalized CPMVs for a virtual block according to a general aspect of at least one embodiment. Once a CU Curr1 is coded in Affine mode, the current affine motion model is derived for the virtual block as if the current CU Curr1 was WᵥᵢᵣxHᵥᵢᵣ, for instance 64x64, and aligned with the W_{grid}xH_{grid} grid, for instance 64x64 grid, (i.e. dotted line block in FIG. 15 represents the virtual block in case where grid and virtual block are aligned) by using Equation 8. Based on the three vectors (*̅v̅*̅₃̅, *̅v̅*̅₄̅, *̅v̅*̅₅̅), the CPMVs of the top-left, top-right and/or bottom-left corners, the CPMVs (*̅v̅̂̅*̅_{3̅}, *̅v̅̂̅*̅_{4̅}, *̅v̅̂̅*̅_{5̅}) of the virtual block or bounding CU (dotted line in FIG. 15) are derived as follows:
- $\vec{{D}_{hor}} = \frac{\left(\vec{{v}_{4}}-\vec{{v}_{3}}\right)}{{W}_{curr 1}}$
- $\vec{{D}_{ver}} = \frac{\left(\vec{{v}_{5}}-\vec{{v}_{3}}\right)}{{H}_{curr 1}}$
- *̅v̅̂̅*̅_{3̅} = *̅v̅*̅₃̅ + *̅D̅ₕ̅ₒ̅ᵣ̅*̅ × (*W_{grid}*└*X*_{*curr*1}/*W_{grid}*┘ - *X*_{*curr*1}) - *̅D̅ᵥ̅ₑ̅ᵣ̅*̅ × (*Hᵥᵢᵣ*└*Y*_{*curr*1}/*Hᵥᵢᵣ*┘-*Y*_{*curr*1})
- *̅v̅̂̅*̅_{4̅} = *̅v̅*̅₃̅ + *̅D̅ₕ̅ₒ̅ᵣ̅*̅ × (*W_{grid}*└*X*_{*curr*1}/*W_{grid}*┘ + *Wᵥᵢᵣ* - *X*_{*curr*1}) - *̅D̅ᵥ̅ₑ̅ᵣ̅*̅ × (*H_{grid}*└*Y*_{*curr*1}/ *H_{grid}*┘ - *Y*_{*curr*1})
- *̅v̅̂̅*̅_{5̅} = *̅v̅*̅₃̅ + *̅D̅ₕ̅ₒ̅ᵣ̅*̅ × (*W_{grid}*└*X*_{*curr*1}/*W_{grid}*┘ - *X*_{*curr*1}) - *̅D̅ᵥ̅ₑ̅ᵣ̅*̅ × (*H_{grid}*└*Y*_{*curr*1}/*H_{grid}*┘ + *Hᵥᵢᵣ* - *Y*_{*curr*1})

In other words, the normalizing process of CPMVs can be formulated as follows in the case Wᵥᵢᵣ = V_{grid} and Hᵥᵢᵣ = H_{grid}: $\begin{matrix}- \vec{{\hat{v}}_{3}} = \vec{{v}_{3}} + \vec{{D}_{hor}} \times \left(-{X}_{curr 1}%{W}_{vir}\right) + \vec{{D}_{ver}} \times \left(-{Y}_{curr 1}%{H}_{vir}\right) \\ - \vec{{\hat{v}}_{4}} = \vec{{v}_{3}} + \vec{{D}_{hor}} \times \left({W}_{vir}-\left({X}_{curr 1}%{W}_{vir}\right)\right) + \vec{{D}_{ver}} \times \left(-{Y}_{curr 1}%{H}_{vir}\right) \\ - \vec{{\hat{v}}_{5}} = \vec{{v}_{3}} + \vec{{D}_{hor}} \times \left(-{X}_{curr 1}%{W}_{vir}\right) + \vec{{D}_{ver}} \times \left({H}_{vir}-\left({Y}_{curr 1}%{H}_{vir}\right)\right)\end{matrix}$ Where (└ ┘) is a floor operator that returns greatest integer less than or equal to the absolute value of the operand and Where % is the modulo operator. $\begin{matrix}∘ \vec{{D}_{hor}} = \frac{\left(\vec{{v}_{4}}-\vec{{v}_{3}}\right)}{{W}_{curr 1}} \\ ∘ \vec{{D}_{ver}} = \left(\begin{matrix}- \vec{{D}_{hor}} . y \\ \vec{{D}_{hor}} . x\end{matrix}\right) \\ ∘ \vec{{\hat{v}}_{3}} = \vec{{v}_{3}} + \vec{{D}_{hor}} \times \left(-{X}_{curr 1}%{W}_{vir}\right) + \vec{{D}_{ver}} \times \left(-{Y}_{curr 1}%{H}_{vir}\right) \\ ∘ \vec{{\hat{v}}_{4}} = \vec{{v}_{3}} + \vec{{D}_{hor}} \times \left(64-\left({X}_{curr 1}%{W}_{vir}\right)\right) + \vec{{D}_{ver}} \times \left(-{Y}_{curr 1}%{H}_{vir}\right)\end{matrix}$

Moreover, the normalized coordinates of $\left(\hat{{x}_{3}}, \hat{{y}_{3}}\right)$ of the virtual normalized block associated to the normalized CPMVs are obtained as follows: $\hat{{x}_{3}} = {W}_{grid} ⌊ \frac{{X}_{curr 1}}{{W}_{grid}} ⌋ = {X}_{curr 1} & \left(0xFFFFFFC0\right) { in case W}_{grid} = 64$ $\hat{{y}_{3}} = {H}_{grid} ⌊ \frac{{Y}_{curr 1}}{{H}_{grid}} ⌋ = {Y}_{curr 1} & \left(0xFFFFFFC0\right) { in case H}_{grid} = 64$

The information representative of these normalized CPMVs position needs to be stored in the local CPMV buffer.

The advantage of using normalized CPMVs include a reduced local CPMV buffer size, because:
- the size of the virtual CUs associated to each stored CPMV is no more stored;
- the memory size needed to store the $\left(\hat{{x}_{3}}, \hat{{y}_{3}}\right)$ position of the virtual 64x64 CU associated to each stored CPMV is reduced, since this position is aligned on a 64x64 spatial grid (i.e. $\hat{{x}_{3}}$ and $\hat{{y}_{3}}$ are multiple of 64).
- CPMV is reduced, since this position is aligned on a 64x64 spatial grid (i.e. $\hat{{x}_{3}}$ and $\hat{{y}_{3}}$ are multiple of 64). Furthermore, note that in the present case where CPMV are aligned on a 64x64 grid, since the local CPMV buffer in used only inside the current CTU row, $\hat{{y}_{3}}$ can only take the value 0 and 64.

Note that according to a variant, the CPMVs stored in the CPMV local buffer may be aligned on a 128x128 block size grid. In that case, $\hat{{y}_{3}}$ is always equal to the y-coordinate of the current CTU row, and only $\hat{{x}_{3}}$ needs to be stored together with the normalized Control Point Motion Vectors.

### 2.3.2 Deriving CPMVs of a CU to decode or encode based of stored normalized CPMVs

Another example method of spatial derivation for affine model is described with reference to FIG. 16. FIG. 16 illustrates an example of CPMVs, normalized CPMVs for a virtual block, normalized CPMVs for a virtual neighboring block according to a general aspect of at least one embodiment. Thus, when encoding a new CU (Curr2 in FIG. 16) with an affine coding mode, neighbors are checked as in FIG. 8. If neighbor A is selected to derive affine motion model, virtual motion model from the virtual CU of the neighboring CU A is retrieved. $\begin{matrix}∘ \vec{{D}_{hor}} = \frac{\left(\vec{{\hat{v}}_{4}}-\vec{{\hat{v}}_{3}}\right)}{{W}_{vir}} \\ ∘ \vec{{D}_{ver}} = \left(\begin{matrix}- \vec{{D}_{hor}} . y \\ \vec{{D}_{hor}} . x\end{matrix}\right) \\ ∘ \vec{{v}_{0}} = \vec{{\hat{v}}_{3}} + \vec{{D}_{hor}} \times \left({X}_{cur}-\hat{{x}_{3}}\right) + \vec{{D}_{ver}} \times \left({Y}_{cur}-\hat{{y}_{3}}\right) \\ ∘ \vec{{v}_{1}} = \vec{{\hat{v}}_{3}} + \vec{{D}_{hor}} \times \left({X}_{cur}+{W}_{cur}-\hat{{x}_{3}}\right) + \vec{{D}_{ver}} \times \left({Y}_{cur}-\hat{{y}_{3}}\right)\end{matrix}$ $\begin{matrix}∘ \vec{{D}_{hor}} = \frac{\left(\vec{{\hat{v}}_{4}}-\vec{{\hat{v}}_{3}}\right)}{{W}_{vir}} \\ ∘ \vec{{D}_{ver}} = \frac{\left(\vec{{\hat{v}}_{5}}-\vec{{\hat{v}}_{3}}\right)}{{H}_{vir}} \\ ∘ \vec{{v}_{0}} = \vec{{\hat{v}}_{3}} + \vec{{D}_{hor}} \times \left({X}_{cur}-\hat{{x}_{3}}\right) + \vec{{D}_{ver}} \times \left({Y}_{cur}-\hat{{y}_{3}}\right) \\ ∘ \vec{{v}_{1}} = \vec{{\hat{v}}_{3}} + \vec{{D}_{hor}} \times \left({X}_{cur}+{W}_{cur}-\vec{{x}_{3}}\right) + \vec{{D}_{ver}} \times \left({Y}_{cur}-\hat{{y}_{3}}\right) \\ ∘ \vec{{v}_{2}} = \vec{{\hat{v}}_{3}} + \vec{{D}_{hor}} \times \left({X}_{cur}-\hat{{x}_{3}}\right) + \vec{{D}_{ver}} \times \left({Y}_{cur}+{H}_{cur}-\hat{{y}_{3}}\right)\end{matrix}$

In the variant with 64x64 virtual CU, the present principles save up to 16 bits for the local storage of affine motion information per CU.

The same method could be applied with different normalized size and position such but non-limiting as 128x128, 32x32, 16x16.

### 2.2 At least one embodiment of an encoding or decoding method storing normalized CMPVs.

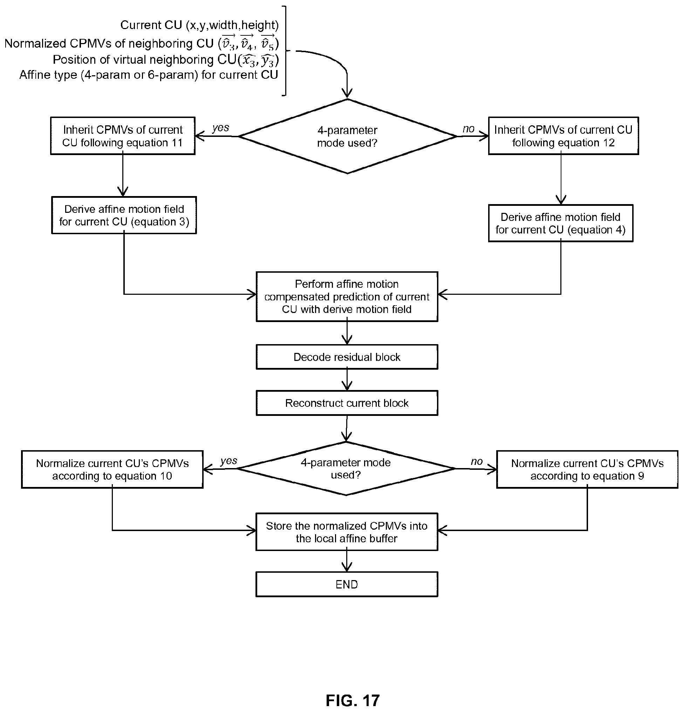

FIG. 17 illustrates an example encoding or decoding method comprising affine CU prediction according to a general aspect of at least one embodiment. FIG. 17 illustrates an embodiment of a local affine buffer of normalized CPMVs, and its use (CPMVs normalizing, storing and inheritance) in the coding and decoding process of affine coding units. FIG. 17 provides the CU decoding process of FIG. 14 modified according to a general aspect of an embodiment. The modifications brought to the CU decoding process of FIG. 14 concern the inheritance of CPMVs from a neighboring CU at spatial position (*x*₃,*y*₃) to the current CU, and the storing of the CPMVs of current CU into the local affine buffer. Firstly, concerning the affine CPMVs inheritance from CU to CU, the modification comprises using the processing of Equation 11 or Equation 12, depending on the affine type (4-parameters or 6-parameters) assigned to the current CU. Secondly, concerning the storing of the CPMVs of current CU into the local affine buffer, a new "CPMVs normalization" step is invoked, in order to process the CPMVs of the current CU from a standard version, previously used to compute the current CU's motion field, to a normalized version. This normalization is performed according to
Equation 10 if the current CU uses the 4-parameters affine type. It is performed according to Equation 9 if the current CU uses the 6-parameters affine type. Then, the normalized CMPVs are stored into the local affine buffer.

### 2.4 Further embodiment, inheriting normalized CPMVs from normalized CPMVs.

According to a further embodiment, the inheritance of affine CMVs from a CU to another CU is directly performed between normalized CPMVs. More precisely, the inheritance of CPMVs of a current CU from a neighboring CU generates the CPMVs of current CU directly in their normalized version. This takes the form of Equation 13 for the 4-parameters affine type, and Equation 14 for the case of the 6-parameters affine type. $\begin{matrix}∘ \vec{{D}_{hor}} = \frac{\left(\vec{\hat{{v}_{4}}}-\vec{\hat{{v}_{3}}}\right)}{{W}_{vir}} \\ ∘ \vec{{D}_{ver}} = \left(\begin{matrix}- \vec{{D}_{hor}} . y \\ \vec{{D}_{hor}} . x\end{matrix}\right) \\ ∘ \vec{\hat{{v}_{0}}} = \vec{\hat{{v}_{3}}} + \vec{{D}_{hor}} \times \left(\hat{{x}_{0}}-\hat{{x}_{3}}\right) + \vec{{D}_{ver}} \times \left(\hat{{y}_{0}}-\hat{{y}_{3}}\right) \\ ∘ \vec{\hat{{v}_{1}}} = \vec{\hat{{v}_{3}}} + \vec{{D}_{hor}} \times \left(\hat{{x}_{0}}+{W}_{vir}-\hat{{x}_{3}}\right) + \vec{{D}_{ver}} \times \left(\hat{{y}_{0}}-\hat{{y}_{3}}\right) \\ ∘ where \hat{{x}_{0}} = {W}_{grid} ⌊ \frac{{X}_{curr}}{{W}_{grid}} ⌋ and \hat{{y}_{0}} = {H}_{grid} ⌊ \frac{{Y}_{curr}}{{H}_{grid}} ⌋\end{matrix}$ $\begin{matrix}∘ \vec{{D}_{hor}} = \frac{\left(\vec{\hat{{v}_{4}}}-\vec{\hat{{v}_{3}}}\right)}{{W}_{vir}} \\ ∘ \vec{{D}_{ver}} = \frac{\left(\vec{\hat{{v}_{5}}}-\vec{\hat{{v}_{3}}}\right)}{{H}_{vir}} \\ ∘ \vec{\hat{{v}_{0}}} = \vec{\hat{{v}_{3}}} + \vec{{D}_{hor}} \times \left(\hat{{x}_{0}}-\hat{{x}_{3}}\right) + \vec{{D}_{ver}} \times \left(\hat{{y}_{0}}-\hat{{y}_{3}}\right) \\ ∘ \vec{\hat{{v}_{1}}} = \vec{\hat{{v}_{3}}} + \vec{{D}_{hor}} \times \left(\hat{{x}_{0}}+{W}_{vir}-\hat{{x}_{3}}\right) + \vec{{D}_{ver}} \times \left(\hat{{y}_{0}}-\hat{{y}_{3}}\right) \\ ∘ \vec{\hat{{v}_{2}}} = \vec{\hat{{v}_{3}}} + \vec{{D}_{hor}} \times \left(\hat{{x}_{0}}-\hat{{x}_{3}}\right) + \vec{{D}_{ver}} \times \left(\hat{{y}_{0}}+{H}_{vir}-\hat{{y}_{3}}\right)\end{matrix}$

### 2.5 Additional embodiment: CPMV bits reduction embodiment

In a particular approach of VVC, it is proposed to reduce the temporal motion buffer by using an alternative motion vector storage method. Motion vectors are stored using a 6-bit mantissa and a 4-bit exponent. The mantissa plus exponent representation effectively quantizes larger motion vector values more coarsely while retaining higher precision for smaller motion vectors. This method allows saving a lot of bits for CPMV representation but may reduce motion vector precision in some cases. This approach is compatible with the present principles of normalization of CPMVs.

According to a particular embodiment, the mantissa exponent representation is used for normalized CPMVs storage. This means the normalized Control Point Motion vectors are represented using 10 bits instead of 18 bits. This saves up to 96 bits for local storage of affine motion information. Thus the combination of embodiment relative to mantissa/exponent representation and normalization advantageously saves up to 112 bits per stored affine model.

### 2.6 Additional Embodiment: Store only one affine motion model per virtual block

As affine motion parameters are required to be stored for each 8x8 block inside a CTU, 256 affine motion parameters need to be stored for a CTU.

In this embodiment, only one affine model is stored for each of the virtual blocks in the spatial partition of the picture. For instance, only one affine motion parameter is stored by 64x64 virtual block (4 affine motion parameters set by CTUs), the first CU coded with affine mode is used to derive affine motion parameters for the current virtual block by using Equation 12. In this embodiment the size of the virtual block may be 32x32 or 16x16 (16 and 64 motion parameters sets by CTU respectively).

This embodiment may be combined with any other embodiment to further reduce the memory storage of affine motion models.

### 2.7 Additional embodiment: application of the proposed normalized CPMV representation in the case of History-Based Affine Model Prediction.

In another approach for VVC, the affine CPMVs used in the CUs of a given CTU row are stored in a dedicated buffer, which is called the history based affine model prediction buffer. This buffer is managed as a FIFO (First In First Out) buffer. Each time a CU is coded in affine mode, its CPMVs are stored in the end of the buffer. Next, when coding or decoding a CU in affine mode, if the CU inherits the affine CPMVs of another CU inside the same CTU row, then the predictor of current CU's CPMVs is retrieved from the history-based affine model prediction buffer. In total, the buffer contains a limited number of stored CPMVs, typically 5.

According to the present embodiment, the CPMVs stored in the history-based buffer are represented in the normalized version disclosed in the present principles in any of its embodiments. In other words, the set of parameters of the affine model are stored in a history based affine memory buffer used for storing affine model of the last encoded or decoded blocks among a limited number of blocks for affine model determination inside a same row of spatial partitions of a picture.

### 2.8 Additional embodiment: combined use of the proposed normalized CPMVs representation and storage, and direct computation of the sub-block motion vectors of an affine CU

To avoid the derivation of the CPMVs of a current CU coded in affine mode, the embodiment directly generates the sub-block MVs from the stored normalized CPMVs.

According to a further embodiment, when a CU inherits the CPMVs of another CU or from some CPMVs stored in the history-based affine model prediction buffer, and if no motion vector difference (MVd) is added to the CPMV predictor (typically in AMVP case), then the affine motion field inside the current CU is directly computed from the stored normalized CPMVs. The CU-to-CU CPMVs derivation process is by-passed.

### 3 Additional Embodiments and Information

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

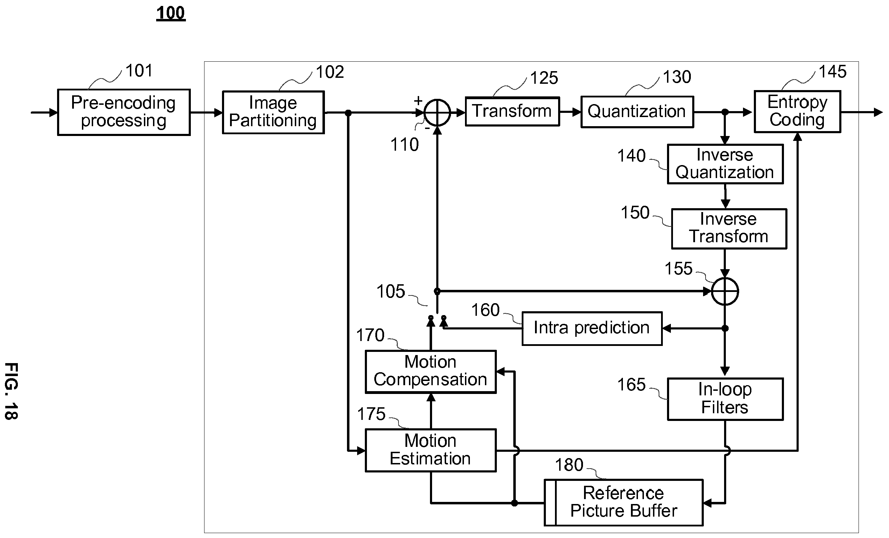

The aspects described and contemplated in this application can be implemented in many different forms. FIGs. 18, 19 and 20 below provide some embodiments, but other embodiments are contemplated and the discussion of FIGs. 18, 19 and 20 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

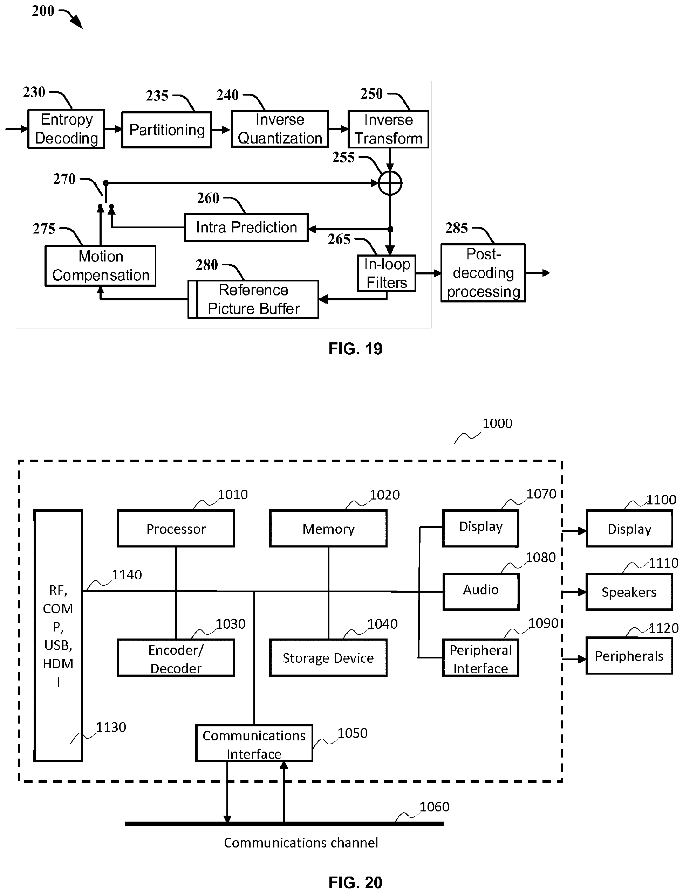

Various methods and other aspects described in this application can be used to modify modules, for example, the motion compensation (170, 275), motion estimation (175), of a video encoder 100 and decoder 200 as shown in FIG. 18 and FIG. 19. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 18 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

FIG. 19 illustrates a block diagram of a video decoder 200. In the decoder 200, a bitstream is decoded by the decoder elements as described below. Video decoder 200 generally performs a decoding pass reciprocal to the encoding pass as described in FIG. 18. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

FIG. 20 illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High *Definition* Multimedia Interface (HDMI) input terminal. Other examples, not shown in FIG. 20, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, affine motion compensation with normalized storage of affine model for memory reduction.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art. Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, affine motion compensation with normalized storage of affine model for memory reduction.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, for example, Affine mode flag, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of parameters for normalized affine model storage. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:
- Representation of affine motion model in a normalized way for reducing the memory used to store the affine motion model of a current block encoded/decoded in affine mode.
- Determining normalized control point motion vectors for a virtual block of fixed size located at a normalized position among fixed positions for virtual blocks in the spatial partition of the picture, the normalized position of the virtual block being derived from the position of the block being encoded in the spatial partition of the picture.
- Storing the normalized CPMVs in the local affine buffer used for block to block CPMVs derivation inside a given row of spatial partition of a picture.
- Derive the CPMVs of a block to encode or decode from stored normalized CPMVs.
- Generate the affine motion field of current block based on the derived CPMVs.
- Derive normalized CPMVs for current block based on normalized CPMVs stored in the local affine buffer.
- Generate the affine motion field of current block based on the normalized CPMVs.
- Store normalized CPMVs in a history-based affine model storage buffer.
- Compress the motion vector contained in a normalized CPMVs under the form of the mantissa exponent format.
- Enabling or disabling the normalization of the affine model used in motion compensation methods in the decoder and/or encoder.
- Inserting in the signalling syntax elements that enable the decoder to identify the possible normalization of affine motion model in motion compensation method.
- A bitstream or signal that includes one or more of the described syntax elements, or variations thereof.
- A bitstream or signal that includes syntax conveying information generated according to any of the embodiments described.
- Inserting in the signaling syntax elements that enable the decoder to adapt normalization in a manner corresponding to that used by an encoder.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.
- A TV, set-top box, cell phone, tablet, or other electronic device that performs normalization of affine motion model according to any of the embodiments described.
- A TV, set-top box, cell phone, tablet, or other electronic device that performs normalization of affine motion model according to any of the embodiments described, and that displays (e.g. using a monitor, screen, or other type of display) a resulting image.
- A TV, set-top box, cell phone, tablet, or other electronic device that selects (e.g. using a tuner) a channel to receive a signal including an encoded image, and performs normalization of affine motion model according to any of the embodiments described.
- A TV, set-top box, cell phone, tablet, or other electronic device that receives (e.g. using an antenna) a signal over the air that includes an encoded image, and performs normalization of affine motion model according to any of the embodiments described.

## Claims

1. A method for video encoding, comprising:
determining, for a block being encoded in affine mode, at least two control point motion vectors of an affine model, said block being encoded belonging to a spatial partition of a picture;
storing, for the block being encoded in affine mode, a set of parameters of said affine model being representative of said at least two control point motion vectors of an affine model, a size of the block being encoded, a location in the spatial partition of the picture of block being encoded; and
encoding the block using said affine model based on the determined at least two control point motion vectors of said affine model;
wherein said storing further comprises
processing said at least two control point motion vectors to determine at least two normalized control point motion vectors for a virtual block of fixed size located at a normalized position among fixed positions for virtual blocks in the spatial partition of the picture, the normalized position of said virtual block being derived from the position of said block being encoded in the spatial partition of the picture;
storing said at least two normalized control point motion vectors and normalized location of the virtual block inside the partition of the picture as the set of parameters of the affine model.

2. A method for video decoding, comprising:
determining, for a block being decoded in affine mode, at least two control point motion vectors of an affine model, said block being decoded belonging to a spatial partition of a picture;
storing, for the block being decoded in affine mode, a set of parameters of said affine model being representative of said at least two control point motion vectors of an affine model, a size of the block being encoded, a location in the spatial partition of the picture of block being encoded; and
decoding the block using said affine model based on the determined at least two control point motion vectors of said affine model;
wherein said storing further comprises
processing said at least two control point motion vectors to determine at least two normalized control point motion vectors for a virtual block of fixed size located at a normalized position among fixed positions for virtual blocks in the spatial partition of the picture, the normalized position of said virtual block being derived from the position of said block being decoded in the spatial partition of the picture;
storing said at least two normalized control point motion vectors and normalized location of the virtual block inside the partition of the picture as the set of parameters of the affine model.

3. An apparatus for video encoding, comprising one or more processors, and at least one memory and wherein the one or more processors is configured to:
determine, for a block being encoded in affine mode, at least two control point motion vectors of an affine model, said block being encoded belonging to a spatial partition of a picture;
store in the at least one memory, for the block being encoded in affine mode, a set of parameters of said affine model being representative of said at least two control point motion vectors of an affine model, a size of the block being encoded, a location in the spatial partition of the picture of block being encoded;and
encode the block using said affine model based on the determined at least two control point motion vectors of said affine model;
wherein the one or more processors is further configured to
process said at least two control point motion vectors to determine at least two normalized control point motion vectors for a virtual block of fixed size located at a normalized position among fixed positions for virtual blocks in the spatial partition of the picture, the normalized position of said virtual block being derived from the position of said block being encoded in the spatial partition of the picture; and to
store in the at least one memory, said at least two normalized control point motion vectors and normalized location of the virtual block inside the partition of the picture as the set of parameters of the affine model.

4. An apparatus for video decoding, comprising one or more processors, and at least one memory and wherein the one or more processors is configured to:
determine, for a block being decoded in affine mode, at least two control point motion vectors of an affine model, said block being decoded belonging to a spatial partition of a picture;
store in the at least one memory, for the block being decoded in affine mode, a set of parameters of said affine model being representative of said at least two control point motion vectors of an affine model, a size of the block being decoded, a location in the spatial partition of the picture of block being decoded; and
decode the block using said affine model based on the determined at least two control point motion vectors of said affine model;
wherein the one or more processors is further configured to
process said at least two control point motion vectors to determine at least two normalized control point motion vectors for a virtual block of fixed size located at a normalized position among fixed positions for virtual blocks in the spatial partition of the picture, the normalized position of said virtual block being derived from the position of said block being decoded in the spatial partition of the picture; and to
store in the at least one memory, said at least two normalized control point motion vectors and normalized location of the virtual block inside the partition of the picture as the set of parameters of the affine model.

5. The method of claim 1 or 2 or the apparatus of claim 3 or 4, wherein determining, for a block being encoded or decoded in affine mode, at least two control point motion vectors of an affine model comprises
determining a neighboring block for a block being encoded or decoded in affine mode from which the affine model of block being encoded or decoded is obtained;
obtaining a set of parameters of the affine model of the neighboring block from the previously stored set of parameters of affine model of virtual blocks, said set of parameters comprising at least two normalized control point motion vectors for a virtual neighboring block of fixed size located at a normalized position among fixed positions for virtual blocks in the spatial partition of the picture, the normalized position of said virtual neighboring block being derived from the position of said neighboring block; and
determining said at least two control point motion vectors of an affine model for the block being encoded or decoded from the at least two normalized control point motion vectors for the virtual neighboring block.

6. The method of claim 5 or the apparatus of claim 5, wherein said at least two normalized control point motion vectors located at said normalized position of said virtual block corresponding to said block being encoded or decoded are obtained from processing of said at least two normalized control point motion vectors for the virtual neighboring block of the block being encoded or decoded.

7. The method of claim 1 or claim 2 or claims 5 to 6 or the apparatus of claim 3 or claim 4 or claims 5 to 6, wherein said set of parameters of the affine model are stored in a local affine memory buffer used for block-to-block affine model determination inside a same row of spatial partition of a picture.

8. The method of claim 1 or claim 2 or claims 5 to 6 or the apparatus of claim 3 or claim 4 or claims 5 to 6, wherein said set of parameters of the affine model are stored in a history based affine memory buffer used for storing affine model of the last encoded or decoded blocks among a limited number of blocks for affine model determination inside a same row of spatial partition of a picture.

9. The method of claim 1 or claim 2 or claims 5 to 8 or the apparatus of claim 3 or claim 4 or claims 5 to 8, wherein the fixed size of a virtual block is determined between 128x128, 64x64, 32x32 and 16x16.

10. The method of claim 1 or claim 2 or claims 5 to 9 or the apparatus of claim 3 or claim 4 or claims 5 to 9, wherein said at least two at least two normalized control point motion vectors are stored in mantissa and exponent format.

11. The method of claim 1 or claim 2 or claims 5 to 10 or the apparatus of claim 3 or claim 4 or claims 5 to 10, wherein only one set of parameters of the affine model for each of the virtual blocks in the spatial partition of the picture is stored.

12. The method of claim 1 or claim 2 or claims 5 to 11 or the apparatus of claim 3 or claim 4 or claims 5 to 11, wherein the fixed positions of virtual blocks in the spatial partition of the picture are located at node of a regular grid of the spatial partition of fixed step and wherein the normalized position of said virtual block being derived from the greatest integer less than or equal to the position of said block being encoded in the spatial partition of the picture scaled by the fixed step.

13. The method of claim 1 or 2, or the apparatus of claim 3 or 4, wherein said processing said at least two control point motion vectors comprises:
for an affine model with three control point motion vectors *̅v̅*̅₃̅, *̅v̅*̅₄̅, *̅v̅*̅₅̅ computing:
∘ $\vec{{D}_{hor}} = \frac{\left(\vec{{v}_{4}}-\vec{{v}_{3}}\right)}{{W}_{curr 1}}$
∘ $\vec{{D}_{ver}} = \frac{\left(\vec{{v}_{5}}-\vec{{v}_{3}}\right)}{{H}_{curr 1}}$
∘ *̅v̅̂̅*̅_{3̅} = *̅v̅*̅₃̅ + *̅D̅ₕ̅ₒ̅ᵣ̅*̅ × (*-X*_{*curr*1}%*Wᵥᵢᵣ*) + *̅D̅ᵥ̅ₑ̅ᵣ̅*̅ × (-*Y*_{*curr*1}%*Hᵥᵢᵣ*)
∘ *̅v̅̂̅*̅_{4̅} = *̅v̅*̅₃̅ + *̅D̅ₕ̅ₒ̅ᵣ̅*̅ × (*Wᵥᵢᵣ* - (*X*_{*curr*1}%*Wᵥᵢᵣ*)) + *̅D̅ᵥ̅ₑ̅ᵣ̅*̅ × (-*Y*_{*curr*1}%*Hᵥᵢᵣ*)
∘ *̅v̅̂̅*̅_{5̅} = *̅v̅*̅₃̅ + *̅D̅ₕ̅ₒ̅ᵣ̅*̅ × (*-X*_{*curr*1}%*Wᵥᵢᵣ*) + *̅D̅ᵥ̅ₑ̅ᵣ̅*̅ × (*Hᵥᵢᵣ -* (*Y*_{*curr*1}%*Hᵥᵢᵣ*))
∘ *where v̅̂̅*_{3̅}, *̅v̅̂̅*̅_{4̅}, *̅v̅̂̅*̅_{5̅} are the three normalized control point motion vectors,
∘ *X*_{*curr*1} and *Y*_{*curr*1} coordinates of the block being encoded or decoded in the spatial partition,
∘ *W*_{*curr*1} and *H*_{*curr*1} are width and height of the block being encoded or decoded,
∘ *Wᵥᵢᵣ and Hᵥᵢᵣ* are fixed width and fixed heigh of the virtual block
∘ % is the modulo operator.
Or for an affine model with two control point motion vectors *̅v̅*̅₃̅, *̅v̅*̅₄̅ computing
∘ $\vec{{D}_{hor}} = \frac{\left(\vec{{v}_{4}}-\vec{{v}_{3}}\right)}{{W}_{cur}}$
∘ $\vec{{D}_{ver}} = \left(\begin{matrix}\vec{{- D}_{hor}} ⋅ y \\ \vec{{D}_{hor}} ⋅ x\end{matrix}\right)$
∘ *̅v̅̂̅*̅_{3̅} = *̅v̅*̅₃̅ + *̅D̅ₕ̅ₒ̅ᵣ̅*̅ × (*-X_{cur}*%*Wᵥᵢᵣ*) + *̅D̅ᵥ̅ₑ̅ᵣ̅*̅ × (-*Y_{cur}*%*Wᵥᵢᵣ*)
∘ *̅v̅̂̅*̅_{4̅} = *̅v̅*̅₃̅ + *̅D̅ₕ̅ₒ̅ᵣ̅*̅ × (*Wᵥᵢᵣ* - (*X_{cur}*%*Wᵥᵢᵣ*)) + *̅D̅ᵥ̅ₑ̅ᵣ̅*̅ × (-*Y_{cur}*%*Wᵥᵢᵣ*)
∘ *where v̅̂̅*_{3̅}, *̅v̅̂̅*̅_{4̅} are normalized two control point motion vectors,
∘ *X_{cur}* and *Y_{cur}* coordinates of the block being encoded or decoded in the spatial partition,
∘ *W_{cur}* is width of the block being encoded or decoded,
∘ *Wᵥᵢᵣ and Hᵥᵢᵣ* are fixed width and fixed heigh of the virtual block

14. The method of claim 5 or the apparatus of claim 5, wherein said determining said at least two control point motion vectors of an affine model for the block being encoded from the at least two normalized control point motion vectors for the virtual neighboring block comprises:
for an affine model with three control point motion vectors *̅v̅*̅₀̅, *̅v̅*̅₁̅, *̅v̅*̅₂̅ :
∘ $\vec{{D}_{hor}} = \frac{\left(\vec{{\hat{v}}_{4}}-\vec{{\hat{v}}_{3}}\right)}{{W}_{vir}}$
∘ $\vec{{D}_{ver}} = \frac{\left(\vec{{\hat{v}}_{5}}-\vec{{\hat{v}}_{3}}\right)}{{H}_{vir}}$
∘ $\vec{{v}_{0}} = \vec{{v}_{3}} + \vec{{D}_{hor}} \times \left({X}_{cur}-\hat{{x}_{3}}\right) + \vec{{D}_{ver}} \times \left({Y}_{cur}-\hat{{y}_{3}}\right)$
∘ $\vec{{v}_{1}} = \vec{{v}_{3}} + \vec{{D}_{hor}} \times \left({X}_{cur}+{W}_{cur}-\hat{{x}_{3}}\right) + \vec{{D}_{ver}} \times \left({Y}_{cur}-\hat{{y}_{3}}\right)$
∘ $\vec{{v}_{2}} = \vec{{v}_{3}} + \vec{{D}_{hor}} \times \left({X}_{cur}-\hat{{x}_{3}}\right) + \vec{{D}_{ver}} \times \left({Y}_{cur}+{H}_{cur}-\hat{{y}_{3}}\right)$
∘ *where v̅̂̅*_{3̅}, *̅v̅̂̅*̅_{4̅}, *̅v̅̂̅*̅_{5̅} are the three normalized control point motion vectors of the virtual neigboring block,
∘ *X_{cur}* and *Y_{cur}* are coordinates of the block being encoded or decoded in the spatial partition,
∘ $\hat{{x}_{3}}$ and $\hat{{y}_{3}}$ are coordinates of the virtual neigboring block,
∘ *Wᵥᵢᵣ and Hᵥᵢᵣ* are fixed width and fixed heigh of the virtual neigboring block;
or for an affine model with two normalized control point motion vectors *̅v̅*̅₀̅, *̅v̅*̅₁̅ :
∘ $\vec{{D}_{hor}} = \frac{\left(\vec{{\hat{v}}_{4}}-\vec{{\hat{v}}_{3}}\right)}{{W}_{vir}}$
∘ $\vec{{D}_{ver}} = \left(\begin{matrix}- \vec{{D}_{hor}} ⋅ y \\ \vec{{D}_{hor} ⋅ x}\end{matrix}\right)$
∘ $\vec{{v}_{0}} = \vec{{v}_{3}} + \vec{{D}_{hor}} \times \left({X}_{cur}-\hat{{x}_{3}}\right) + \vec{{D}_{ver}} \times \left({Y}_{cur}-\hat{{y}_{3}}\right)$
∘ $\vec{{v}_{1}} = \vec{{v}_{3}} + \vec{{D}_{hor}} \times \left({X}_{cur}+{W}_{cur}-\hat{{x}_{3}}\right) + \vec{{D}_{ver}} \times \left({Y}_{cur}-\hat{{y}_{3}}\right)$
∘ *where v̅̂̅*_{3̅}, *̅v̅̂̅*̅_{4̅}, *̅v̅̂̅*̅_{5̅} are the three normalized control point motion vectors,
∘ *X_{cur}* and *Y_{cur}* are the coordinates of the block being encoded or decoded in the spatial partition
∘ *Wᵥᵢᵣ and Yᵥᵢᵣ* are fixed width and fixed heigh of the virtual block.

15. The method of claim 6 or the apparatus of claim 6, wherein said determining said at least two normalized control point motion vectors of an affine model for the block being encoded from the at least two normalized control point motion vectors for the virtual neighboring block comprises:
for an affine model with three control point motion vectors :
∘ $\vec{{D}_{hor}} = \frac{\left(\vec{{\hat{v}}_{4}}-\vec{{\hat{v}}_{3}}\right)}{{W}_{vir}}$
∘ $\vec{{D}_{ver}} = \frac{\left(\vec{{\hat{v}}_{5}}-\vec{{\hat{v}}_{3}}\right)}{{H}_{vir}}$
∘ $\vec{\hat{{v}_{0}}} = \vec{\hat{{v}_{3}}} + \vec{{D}_{hor}} \times \left(\hat{{x}_{0}}-\hat{{x}_{3}}\right) + \vec{{D}_{ver}} \times \left(\hat{{y}_{0}}-\hat{{y}_{3}}\right)$
∘ $\vec{\hat{{v}_{1}}} = \vec{\hat{{v}_{3}}} + \vec{{D}_{hor}} \times \left(\hat{{x}_{0}}+{W}_{vir}-\hat{{x}_{3}}\right) + \vec{{D}_{ver}} \times \left(\hat{{y}_{0}}-\hat{{y}_{3}}\right)$
∘ $\vec{\hat{{v}_{2}}} = \vec{\hat{{v}_{3}}} + \vec{{D}_{hor}} \times \left(\hat{{x}_{0}}-\hat{{x}_{3}}\right) + \vec{{D}_{ver}} \times \left(\hat{{y}_{0}}+{H}_{vir}-\hat{{y}_{3}}\right)$
∘ *where v̅̂̅*_{3̅}, *̅v̅̂̅*̅_{4̅}, *̅v̅̂̅*̅_{5̅} are the three normalized control point motion vectors of the virtual neigboring block,
∘ *̅v̅̂̅*̅_{0̅}, *̅v̅̂̅*̅_{1̅}, *̅v̅̂̅*̅_{2̅} are the three normalized control point motion vectors of the virtual block,
∘ $\hat{{x}_{0}}$ and $\hat{{y}_{0}}$ coordinates of the virtual neigboring block in the spatial partition,
∘ $\hat{{x}_{3}}$ and $\hat{{y}_{3}}$ coordinates of the virtual block in the spatial partition,
∘ *Wᵥᵢᵣ and Hᵥᵢᵣ* are fixed width and fixed heigh of the virtual neigboring block;
or for an affine model with two normalized control point motion vectors :
∘ $\vec{{D}_{hor}} = \frac{\left(\vec{\hat{{v}_{4}}}-\vec{\hat{{v}_{3}}}\right)}{{W}_{vir}}$
∘ $\vec{{D}_{ver}} = \left(\begin{matrix}- \vec{{D}_{hor}} ⋅ y \\ \vec{{D}_{hor} ⋅ x}\end{matrix}\right)$
∘ $\vec{\hat{{v}_{0}}} = \vec{\hat{{v}_{3}}} + \vec{{D}_{hor}} \times \left(\hat{{x}_{0}}-\hat{{x}_{3}}\right) + \vec{{D}_{ver}} \times \left(\hat{{y}_{0}}-\hat{{y}_{3}}\right)$
∘ $\vec{\hat{{v}_{1}}} = \vec{\hat{{v}_{3}}} + \vec{{D}_{hor}} \times \left(\hat{{x}_{0}}+{W}_{vir}-\hat{{x}_{3}}\right) + \vec{{D}_{ver}} \times \left(\hat{{y}_{0}}-\hat{{y}_{3}}\right)$
∘ where *̅v̅̂̅*̅_{3̅}, *̅v̅̂̅*̅_{4̅} are the three normalized control point motion vectors of the virtual neigboring block,
∘ *̅v̅̂̅*̅_{0̅}, *̅v̅̂̅*̅_{1̅} are the three normalized control point motion vectors of the virtual block,
∘ $\hat{{x}_{0}}$ and $\hat{{y}_{0}}$ coordinates of the virtual neigboring block in the spatial partition,
∘ $\hat{{x}_{3}}$ and $\hat{{y}_{3}}$ coordinates of the virtual block in the spatial partition,
∘ *Wᵥᵢᵣ* are fixed width and fixed heigh of the virtual neigboring block.
